# EUROPÄISCHE PATENTSCHRIFT

(11) **EP 3 256 302 B1**
(45) Veröffentlichungstag und Bekanntmachung des Hinweises auf die Patenterteilung: **23.06.2021**
(21) Anmeldenummer: 16704216.7
(22) Anmeldetag: 12.02.2016
(51) Int. Cl.: B29C 44/32, E04B 2/74, E04B 2/82, B29K 75/00, B29L 31/26

(54) **VERFAHREN UND VORRICHTUNG ZUR HERSTELLUNG EINES UNIVERSELLEN PROFILELEMENTS**
METHOD AND APPARATUS FOR PRODUCING A UNIVERSAL PROFILE ELEMENT
PROCÉDÉ ET DISPOSITIF DE PRODUCTION D'UN ÉLÉMENT PROFILÉ UNIVERSEL

(30) Priorität: 13.02.2015 EP 15155101; 13.02.2015 EP 15155100; 13.02.2015 EP 15155102; 13.02.2015 EP 15155103; 11.05.2015 EP 15167086
(43) Veröffentlichungstag der Anmeldung: 20.12.2017
(73) Patentinhaber: Hilti Aktiengesellschaft, 9494 Schaan (LI)
(72) Erfinder: KLEIN, Manfred, 86916 Kaufering (DE); BRAUNMÜLLER, Walter, 86916 Kaufering (DE)
(74) Vertreter: Hilti Aktiengesellschaft Corporate Intellectual Property
(86) Internationale Anmeldenummer: PCT/EP2016/053019
(87) Internationale Veröffentlichungsnummer: WO 2016/128553

(56) Entgegenhaltungen:
- EP-A1- 1 389 629
- DE-A1- 4 006 997
- GB-A- 2 425 507
- US-A- 3 634 565
- US-A- 4 082 824
- US-A1- 2009 107 623

## Beschreibung

### GEBIET DER ERFINDUNG

Die vorliegende Erfindung betrifft ein Verfahren zur Herstellung eines Profilelements zum Abdichten von Bauwerksfugen, insbesondere zur Abdichtung gegen Schall und Rauch und gegebenenfalls gegen Feuer, eine Vorrichtung zur Herstellung eines solchen Profilelements sowie die Verwendung des erfindungsgemäß hergestellten Profilelements für die akustische, rauchsichere und/oder brandsichere Abdichtung von Anschlussfugen bei Trockenbauwänden vor allem von Bewegungsfugen. Insbesondere betrifft die Erfindung ein verbessertes Verfahren zur kontinuierlichen und endlosen Herstellung eines universellen Profilelements für unterschiedliche Profildimensionen.

### HINTERGRUND DER ERFINDUNG

Anschlussfugen entstehen in der Regel, wenn unterschiedliche Bauteile aufeinander treffen. Anschlussfugen befinden sich im Anschlussbereich zur Geschossdecke, zum Fußboden und zu Massivwänden. Durch Gewichtsbelastung oder thermische Einflüsse kann es bei Gebäuden zu einem Senken oder Heben der Decke kommen. Um Beschädigungen der Trockenbauwand zu vermeiden, wird in diesem Fall die obere Anschlussfuge als Bewegungsfuge ausgeführt. Als Bewegungsfugen werden daher Fugen zur Unterbrechung von Bauteilen bezeichnet, die Spannungsrissen vorbeugen. Das Deckenprofil wird derart ausgeführt, dass eine Relativbewegung zwischen Deckenprofil und den senkrechten Wandkomponenten möglich ist.

Im Allgemeinen wird auf die Anschlussbauteile ein U-Profil befestigt, welches Teil des Ständerwerkes ist. Gewöhnliche U-Profile mit denen gearbeitet wird, sind insbesondere U-Profile mit Profilbreiten von 2-1/2 Inch (64 mm), 3-5/8 Inch (92 mm), 4 Inch (102 mm), 6 Inch (152 mm), 8 Inch (203 mm) und 10 Inch (254 mm). Die Gipskartonplatten selber werden mit einem definierten Abstand zum Anschlussbauteil angebracht. Üblicherweise erfolgt die Abdichtung des Systems im Spalt zwischen Gipskartonplatte und Decke. Hierzu wird entweder eine geeignete Dichtmasse eingebracht oder aber der Spalt mit Mineralwolle gefüllt und an der Oberfläche mit einer abdichtenden Schicht versehen. In beiden Fällen behindert das in der Fuge befindliche Material die Bewegung relativ stark, mit der Konsequenz, dass zur Erzielung einer ausreichenden Bewegungsaufnahme mit verhältnismäßig großen Fugenbreiten gearbeitet werden muss.

Unterschiedliche Verfahren zur Herstellung von Profilelementen, wie Profilsträngen und Fugenschnüren, zum Abdichten von Bauwerksfugen, insbesondere Anschlussfugen, gegen Schall und Rauch sind aus dem Stand der Technik bekannt.

DE 3038524 A1 beschreibt ein Dehnungsfugenband, das mit einem flexiblen Schlauch ausgerüstet ist, wobei das Dehnungsfugenband in eine Fuge zwischen den Betonelementen eingelassen wird. Der flexible Schlauch dient dazu, weiteres Fugenmaterial, wie Polyurethan, nachzufüllen, um die Fuge nachträglich abzudichten, was die Montage und Handhabung erschwert.

DE 4006997 A1 beschreibt ein Verfahren und eine Vorrichtung zum Herstellen von Profilsträngen aus Brandschutz-Schaumstoffen unter Verwendung eines in einem Mischer zubereiteten Reaktionsgemisches, das in einen geschlossenen, flexiblen und luftdichten Folienschlauch gefüllt wird, wobei der Folienschlauch vor Gebrauch des Profilstrangs entfernt wird.

DE 102010008570 A1 beschreibt ein Verfahren zur Herstellung einer Brandschutz-Fugenschnur, wobei ein intumeszierender Schaum in einen Schlauch strömt und aufgeschäumt wird. Nachteilig in DE 102010008570 A1 ist der vorbestimmte Durchmesser des Schlauches sowie möglich auftretender Rückstau der Materialmasse während des Herstellungsverfahrens oder ungenügend Materialmasse in der hergestellten Fugenschnur.

US 2,898,634 beschreibt ein Verfahren zur Herstellung eines aufgeschäumten plastischen Materials, insbesondere eines Materials von runder Geometrie. Unterschiedliche Formgebungen des aufgeschäumten Materials, z. B. für eine bestimmte Form von Fugendichtungsbändern, sind nicht möglich.

Die Systeme des Standes der Technik zeigen weitere zusätzliche Nachteile wie z. B. erheblicher Zeitaufwand bei der Herstellung durch aufwendige Reinigungsschritte der Anlage bzw. durch umständliches Rüsten, hohe Kosten, Aufbau der Fugenschnur bzw. des Profilelements aus mehreren Komponenten oder aufwendigen Konstruktionselementen, schlechte Schneidbarkeit, hohes Gewicht, oder sehr unangenehme Montage für Bauwerksfugen, insbesondere für Anschlussfugen.

Aufgabe der Erfindung ist es daher, ein Verfahren zur Herstellung eines Profilelements zum Abdichten von Bauwerksfugen, insbesondere zur Abdichtung gegen Schall und Rauch und gegebenenfalls gegen Feuer, bereitzustellen, das die Nachteile der bekannten Verfahren vermeidet. Insbesondere ist es Aufgabe der vorliegenden Erfindung ein verbessertes Verfahren zur kontinuierlichen und endlosen Herstellung eines solchen Profilelements bereitzustellen, das universell für unterschiedliche Profildimensionen im Trockenbau einsetzbar ist.

Eine weitere Aufgabe der vorliegenden Erfindung ist es, eine Vorrichtung bereitzustellen, die die kostengünstige, ökonomische, kontinuierliche und endlose Herstellung eines solchen Profilelements ermöglicht.

Eine weitere Aufgabe der vorliegenden Erfindung ist es, die Verwendung des erfindungsgemäß hergestellten Profilelements für die akustische, rauchsichere und/oder brandsichere Abdichtung von Anschlussfugen bei Trockenbauwänden vor allem von Bewegungsfugen, bereitzustellen.

Diese und weitere Aufgaben, die aus der folgenden Beschreibung der Erfindung ersichtlich sind, werden durch die vorliegende Erfindung, wie sie in den unabhängigen Ansprüchen beschrieben ist, gelöst. Die abhängigen Ansprüche beziehen sich auf bevorzugte Ausführungsformen.

### ZUSAMMENFASSUNG DER ERFINDUNG

Die vorliegende Erfindung betrifft ein Verfahren zur Herstellung eines Profilelements zum Abdichten einer Bauwerksfuge gemäß Anspruch 1.

Die vorliegende Erfindung betrifft ferner eine Vorrichtung zur Herstellung eines Profilelements, zum Abdichten einer Bauwerksfuge, mit einer Gießanlage zum Mischen und Aufbringen eines fließfähigen Reaktionsgemisches gemäß Anspruch 8.

Ferner betrifft die vorliegende Erfindung die Verwendung des erfindungsgemäßen Verfahrens bzw. der erfindungsgemäßen Vorrichtung zur Herstellung eines Profilelements.

Andere Aufgaben und Merkmale dieser Erfindung sind zum Teil offensichtlich und werden zum Teil im Folgenden erläutert. Insbesondere wird der Gegenstand der vorliegenden Erfindung im Detail durch Bezugnahme auf die folgenden Figuren beschrieben:

### KURZE BESCHREIBUNG DER FIGUREN

Figur 1 zeigt eine skizzierte Ausführungsform der erfindungsgemäßen Vorrichtung zur Herstellung eines Profilelements.
Figur 2a zeigt eine skizzierte Vorderansicht einer Ausführungsform eines erfindungsgemäß hergestellten Profilelements, wobei die Dichtbereiche ein Vollprofil und Rechteckprofil mit abgerundeten Ecken aufweisen und das Verbindungselement eine Perforierung aufweist.
Figur 2b zeigt eine skizzierte Vorderansicht einer Ausführungsform eines erfindungsgemäß hergestellten Profilelements, wobei die Dichtbereiche ein Vollprofil und Rechteckprofil mit abgerundeten Ecken aufweisen, das Verbindungselement eine Perforierung und ein Verbreiterungselement aufweist.
Figur 2c zeigt eine skizzierte Vorderansicht einer Ausführungsform eines auseinandergezogenen erfindungsgemäß hergestellten Profilelements, wobei die Dichtbereiche ein Vollprofil und Rechteckprofil mit abgerundeten Ecken aufweisen und wobei das Verbreiterungselement die beiden auseinandergetrennten Profilelementhälften verbindet.
Figur 3 zeigt die Anwendung einer Ausführungsform eines erfindungsgemäß hergestellten Profilelements für die akustische, rauchsichere und/oder brandsichere Abdichtung von Anschlussfugen bei Trockenbauwänden.

### AUSFÜHRLICHE BESCHREIBUNG DER ERFINDUNG

Die folgenden Begriffe werden im Rahmen der vorliegenden Erfindung verwendet: Der Begriff "Profilgeometrie" im Rahmen der vorliegenden Erfindung umfasst verschiedene Querschnittsarten und Querschnittsformen des Profilelements. Dies bedeutet, dass insbesondere die Dichtbereiche des Profilelements unterschiedliche Querschnittsarten aufweisen können. Unter Querschnittsarten werden u.a. Rundprofil (runder Querschnitt), Ovalprofil (ovaler Querschnitt), Mehreckprofil (mehreckiger Querschnitt), insbesondere Quadratprofil (quadratischer Querschnitt), Rechteckprofil (rechteckiger Querschnitt), Parallelogrammprofil (Querschnitt in Form eines Parallelogramms), Dreieckprofil (dreieckiger Querschnitt), etc., verstanden. Es sind jedoch auch andere oder gemischte Querschnittsformen denkbar und möglich, wie zum Beispiel ein Rechteckprofil mit abgerundeten Ecken. Unter Querschnittsformen werden u.a. Vollprofil und Hohlprofil verstanden, wobei beim Vollprofil die Dichtbereiche vollständig aus Dichtmaterial bestehen, wohingegen beim Hohlprofil die Dichtbereiche nur teilweise aus Dichtmaterial bestehen.

Der Begriff "verformbar" im Rahmen der vorliegenden Erfindung bedeutet, dass Unebenheiten im Bauteil ausgeglichen werden können, gegen das das Profilelement gepresst wird. "Plastisch verformbar" bedeutet dabei, dass das Profilelement verformbar ist und nach der Verformung nicht wieder in seine ursprüngliche Form zurückkehrt. "Elastisch verformbar" bedeutet dabei, dass das Profilelement verformbar ist und nach der Verformung wieder in seine ursprüngliche Form zurückkehrt, d.h. dass das Material sich zu einem gewissen Grad reversibel verformen lässt.

Die Begriffe "aufweisen", "mit" und "haben" sollen einschließend sein und bedeuten, dass auch andere als die genannten Elemente gemeint sein können.

Der Begriff "Intumeszenz" im Rahmen der vorliegenden Erfindung bedeutet dabei, dass unter Einwirkung von Hitze, beispielsweise im Brandfall, sich das Material aufbläht und eine isolierende Schicht aus schwerentflammbarem Material bildet, also intumesziert.

Unter "langsam abbrennenden Schaumstoff" wird im Rahmen der vorliegenden Erfindung ein Schaumstoff verstanden, der keine Möglichkeit der Brandausbreitung durch den Schaumstoff bietet, nicht eigenentflammbar ist und auch nicht abtropft. Im Rahmen der vorliegenden Erfindung verwendet, schließen die Singularformen "ein", "eine" und "einer" auch die entsprechenden Pluralformen ein, sofern der Zusammenhang nicht eindeutig auf etwas anderes schließen lässt. Somit soll zum Beispiel der Begriff "ein" "ein oder mehrere" oder "zumindest ein" bedeuten, sofern nicht anders angegeben.

In einem Aspekt betrifft die vorliegende Erfindung ein Verfahren zur Herstellung eines Profilelements zum Abdichten einer Bauwerksfuge, gemäß Anspruch 1.

In einem weiteren Aspekt betrifft die vorliegende Erfindung eine Vorrichtung zur Herstellung eines Profilelements, zum Abdichten einer Bauwerksfuge, mit einer Gießanlage zum Mischen und Aufbringen eines fließfähigen Reaktionsgemisches, gemäß Anspruch 8.

In einem noch weiteren Aspekt betrifft die vorliegende Erfindung die Verwendung des erfindungsgemäß hergestellten Profilelements für die akustische, rauchsichere und/oder brandsichere Abdichtung von Anschlussfugen bei Trockenbauwänden vor allem von Bewegungsfugen.

Ein solches Profilelement ist in PCT/EP2016/053013 im Detail beschrieben.

Es wurde herausgefunden, dass das erfindungsgemäße Verfahren sich besonders dazu eignet, in einfacher, kontinuierlicher, ökonomischer und kostengünstiger Weise ein Profilelement herzustellen, um eine Bauwerksfuge zwischen zwei aneinandergrenzenden Bauteilen sicher abzudichten, insbesondere gegen Schall und/oder Rauch und gegebenenfalls auch gegen Feuer. Insbesondere ist das erfindungsgemäß hergestellte Profilelement für unterschiedliche Profilbreiten, insbesondere eines U-Profils eines Trockenbauständerwerks, universell einsetzbar. Damit das Profilelement seine Funktion erfüllen kann, muss das Verbindungselement des Profilelements eine Perforierung aufweisen. Darüber hinaus ist es von Vorteil, dass die Dichtbereiche des Profilelements eine vorbestimmte Geometrie aufweisen.

Daher ist es ein Ziel der vorliegenden Erfindung, das Verfahren zur Herstellung eines Profilelements zum Abdichten einer Bauwerksfuge zu beschreiben. Ferner ist es Ziel der vorliegenden Erfindung, die Vorrichtung zur Herstellung eines Profilelements, zum Abdichten einer Bauwerksfuge, detailliert zu beschreiben. Weiter ist es Ziel der vorliegenden Erfindung, die Verwendung des erfindungsgemäß hergestellten Profilelements für die akustische, rauchsichere und/oder brandsichere Abdichtung von Anschlussfugen bei Trockenbauwänden vor allem von Bewegungsfugen, zu beschreiben.

Ein solches Profilelement lässt sich erfindungsgemäß dadurch herstellen, dass ein geeignetes fließfähiges Reaktionsgemisch auf eine flache Folie aufgebracht wird, von der anschließend ein erster Seitenkantenbereich mit einem zweiten Seitenkantenbereich zum Erzeugen eines im Wesentlichen zylindrischen Profilelements verbunden wird, wobei dann das aufschäumende, verformbare Material zusammen mit der Folie eine Reaktionsstrecke durchläuft und zu einem Profilelement geformt wird.

Daher umfasst das erfindungsgemäße Verfahren zur Herstellung eines Profilelements zum Abdichten einer Bauwerksfuge die folgenden Schritte:
a) Bereitstellen einer ersten Folie auf einem Förderband,
b) Aufbringen eines fließfähigen Reaktionsgemisches auf einer Oberseite der ersten Folie,
c) Verbinden eines ersten Seitenkantenbereichs der ersten Folie mit einem zweiten Seitenkantenbereich der ersten Folie zum Erzeugen eines im Wesentlichen zylindrischen Profilelements, wobei das Volumen des aufzubringenden fließfähigen Reaktionsgemisches so dosiert wird, dass es im ausreagierten Zustand dem Innenvolumen des hergestellten Profilelements entspricht und wobei die Folie das Reaktionsgemisch vollständig umschließt, und
d) Perforierung des Profilelements.

Ferner umfasst das erfindungsgemäße Verfahren die Schritte:
e) Aufschäumen des fließfähigen Reaktionsgemisches,
f) Formgebung der gewünschten Profilgeometrie,
g) Entlüftung des Profilelements, und
h) Zuschneiden der gewünschten Länge des Profilelements.

Das erfindungsgemäße Verfahren umfasst ferner die Schritte:
i) Bereitstellen einer zweiten Folie,
j) Verbinden der zweiten Folie in Form einer Schlaufe mit der oberen oder unteren Außenseite der ersten Folie.

Gemäß der Erfindung umfassen die Schritte c) und j) das Verbinden mittels thermischen Schweißens. Erfindungsgemäß erfolgt in einem ersten Schritt des Verfahrens das Bereitstellen einer Folie mittels einer Zuführungsvorrichtung, die mindestens eine Rolle umfasst, worüber die Folie aus einem Folienvorrat einer rotierenden Walze, gegebenenfalls zur Perforation, zugeführt wird.

Zweckmäßig bestehen die bereitgestellten Folien aus Kunststoff. Das Material der Folie ist bevorzugt ein Kunststoffmaterial, das keine Haftverbindungen mit dem Schaumsystem eingeht und die Schaumdrücke ohne zusätzliche Stützform aushält. Alternativ kann bei Verwendung von anderen Folien aus z. B. Papier oder Gewebe, das Aufschäumen in der Folienhülle auch in einer Stützform erfolgen, welche die Außenkontur der sich während des Schäumvorgangs aufweitenden Folie bestimmt.

Im erfindungsgemäßen Verfahren wird die Folie, vorzugsweise als eine perforierte Folie, bereitgestellt. Geeignet Folienmaterialien sind unter anderem Polymere, wie z. B. Silikon, Polyethylen, Polypropylen, Polyurethan, Polyvinylchlorid, Kautschuk und/oder Gemische davon. Bevorzugt wird die Folie als eine Polyethylenfolie bereitgestellt. In einer besonders bevorzugten Ausführungsform der Folie ist die Folie eine perforierte Polyethylenfolie.

Perforation der Folie kann mittels einer rotierenden Walze oder anderen Mitteln, die zur Erzeugung einer Perforation geeignet sind, erfolgen. Bevorzugt erfolgt die Perforation der Folie mittels einer rotierenden Walze mit aufgebrachten Nadeln. Alternativ kann die Perforation auch durch Schlitz- und Lochstanzen erfolgen. Die Perforation ermöglicht den Austritt von im Folienschlauch eingeschlossener Umgebungsluft und entstehenden Reaktionsgasen während der Aufschäumreaktion des fließfähigen Reaktionsgemisches und verhindert so Gaseinschlüsse, die Blasenbildung innerhalb des Profilelements bzw. unter der Folie hervorrufen können. Durch die Perforation und damit der Möglichkeit des Gasentweichens wird eine gleichmäßige Formgebung sichergestellt.

In einem nächsten Schritt des erfindungsgemäßen Verfahrens wird die Folie flach aufgelegt auf ein Fördermittel gelegt, vorzugsweise ein Förderband oder Laufband, und über eine Formschulter geleitet, wo die Seitenkantenbereiche der Folie leicht aufgestellt werden, um in einem nächsten Schritt das fließfähige Reaktionsgemisch aufzubringen.

Erfindungsgemäß wird im Verfahren ein verformbares fließfähiges Reaktionsgemisch eingesetzt. Das Material kann dabei entweder plastisch oder elastisch verformbar sein. Bevorzugt ist das verformbare fließfähige Reaktionsgemisch ein Polyethylen-, ein Polyurethan-, oder ein Zellkautschukgemisch. Insbesondere besteht das fertig gestellte Profilelement aus einem nach Kompression rückstellfähigen Material, wie beispielsweise Schaumstoff, Moosgummi, Zellkautschuk oder dergleichen. Als Schaumstoffmaterial sind übliche Schaumstoffe, wie Polyethylen- und Polyurethanschaumstoff oder Zellkautschuk, zu nennen. Der Schaumstoff kann dabei ein offenzelliger Schaumstoff mit sehr geringem Luftdurchtrittswiderstand sein, ebenso ein nahezu geschlossenzelliger Schaumstoff mit extrem geringen Luftdurchtrittswerten. Auch Schaumstoffe mit Luftdurchtrittswerten, die zwischen den beiden oben genannten Extremfällen liegen, können im Rahmen der vorliegenden Erfindung verwendet werden. Bevorzugt ist, dass das fließfähige Reaktionsgemisch ein Polyurethangemisch ist.

Es hat sich als vorteilhaft erwiesen, wenn das nach dem erfindungsgemäßen Verfahren hergestellte Profilelement aus einem langsam abbrennenden Schaumstoff, wie beispielsweise Zellkautschuk oder Polyurethanschaum, besteht, der mit einer Folie ummantelt ist. Bei einem langsam abbrennenden Schaumstoff besteht keine Möglichkeit der Brandausbreitung durch den Schaumstoff. Eine Eigenentflammung ist bei den oben genannten Schaumstoffausgangsmaterialien ausgeschlossen. Vorteilhaft ist, dass im Brandfall auch kein Abtropfen erfolgt. Ein langsam abbrennender Schaumstoff sollte in einem Temperaturbereich zwischen 500°C bis 800°C noch mindestens 20%, noch mindestens 25%, vorzugsweise noch mindestens 30%, zwischen 20% bis 60%, zwischen 20% bis 40%, vorzugsweise zwischen 25% bis 30%, seines Ausgangsvolumens besitzen. Ferner sollte ein langsam abbrennender Schaumstoff in einem Temperaturbereich zwischen 500°C bis 800°C noch mindestens 10%, mindestens 20%, vorzugsweise noch mindestens 30%, zwischen 10% bis 40%, zwischen 10% bis 30%, vorzugsweise zwischen 15% bis 20%, seiner Ausgangsmasse besitzen.

Ferner kann das verformbare fließfähige Reaktionsgemisch, sofern Brandschutzeigenschaften, wie beispielsweise Intumeszenz, gewünscht sind, entsprechende Additive enthalten. Unter Einwirkung von Hitze, wie im Brandfall, bläht sich das Material auf und bildet eine isolierende Schicht aus schwerentflammbarem Material. Die Bildung einer voluminösen, isolierenden Schicht, nämlich einer Ascheschicht, kann durch die chemische Reaktion eines Gemisches aus entsprechenden aufeinander abgestimmten Verbindungen, die bei Hitzeeinwirkung miteinander reagieren, gebildet werden. Solche Systeme sind dem Fachmann unter dem Begriff chemische Intumeszenz bekannt und können erfindungsgemäß eingesetzt werden. Alternativ kann die voluminöse, isolierende Schicht durch Aufblähen einer einzelnen Verbindung, die, ohne dass eine chemische Reaktion zwischen zwei Verbindungen stattgefunden hat, bei Hitzeeinwirkung Gase freisetzen, gebildet werden. Solche Systeme sind dem Fachmann unter dem Begriff physikalische Intumeszenz bekannt und können ebenfalls erfindungsgemäß eingesetzt werden. Beide Systeme können jeweils alleine oder zusammen als Kombination erfindungsgemäß eingesetzt werden.

In einer bevorzugten Ausführungsform des Verfahrens der vorliegenden Erfindung ist das fließfähige Reaktionsgemisch ein intumeszierendes Polyurethangemisch.

Das fließfähige Reaktionsgemisch kann zum Beispiel in einem vorgeschalteten Mischverfahren gemischt werden, z. B. schon in einer Anlage, die zum Aufbringen des fließfähigen Reaktionsgemisches geeignet ist, wie eine Gießanlage.

Bevorzugt erfolgt das Aufbringen des fließfähigen Reaktionsgemisches durch gleichmäßiges orthogonales Dosieren zu einer Oberseite der Folie. Insbesondere ist bei der erfindungsgemäßen Herstellung des Profilelements erforderlich, dass das fließfähige Reaktionsgemisch gleichmäßig orthogonal zu der Oberseite der offenen, flachen Folie dosiert wird. Dadurch wird auftretender Rückstau der Materialmasse in einem schon vorgefertigten Schlauch während des Herstellungsverfahrens oder ungenügend Materialmasse in der hergestellten Fugenschnur verhindert. Bevorzugt wird das Volumen des aufzubringenden fließfähigen Reaktionsgemisches so dosiert, dass es im ausreagierten Zustand dem Innenvolumen des hergestellten Profilelements entspricht.

Die befüllte Folie wird anschließend mittels Fördertechnik zu einer Schweißanlage geführt, wo ein erster Seitenbereich der Folie mit einem zweiten Seitenkantenbereich der Folie zum Erzeugen eines im Wesentlichen zylindrischen Profilelements verbunden wird. Vorzugsweise erfolgt der Schritt des Verbindens durch thermisches Schweißen unter Ausbildung einer Fischflossenschweißnaht. Die Folie sollte dabei das Reaktionsgemisch vollständig umschließen.

Dieses so entstandene schlauchartige Profilelement wird anschließend mittels Fördertechnik über eine Reaktionsstrecke geführt, in der das Aufschäumen des fließfähigen Reaktionsgemisches erfolgt. Vorzugsweise erfolgt das Aufschäumen des fließfähigen Reaktionsgemisches in einem Zeitraum von 15 bis 90 Sekunden. Das Aufschäumen findet zwischen der thermischen Schweißanlage und einer Perforationseinheit statt. In einer besonderen Ausführungsform des Verfahrens der vorliegenden Erfindung umfasst die Fördertechnik ein Förderband oder Laufband mit Führungselementen, z. B. Noppen oder Vertiefungen, zum exakten Führen der Folie.

Während des Führens über die Reaktionsstrecke kann gegebenenfalls eine Formgebung der gewünschten Profilgeometrie erfolgen. Vorzugsweise kann die gewünschte Profilgeometrie durch mindestens ein Förderband oder Profil geformt werden.

Anschließend findet eine Entlüftung des Profilelements mittels einer Perforationseinheit statt, wenn der Schaum die Form ausgefüllt hat und die ursprünglichen Entlüftungslöcher durch den Schaum abgedichtet sind, um die Reaktionsgase abzulassen und den entstandenen Druck abzubauen. Dieses Entlüften verhindert, dass der sich Folienmantel sich vom Schaum löst und zu einem Schlauch (Ausgangsform) aufbläht. Das Entlüften kann auch mittels Einstechen von kleinen Öffnungen in die Folie, beispielweise mit Hilfe einer Nadel oder Nadelwalze oder durch Schlitz- und Lochstanzen, erfolgen. Bevorzugt erfolgt die Perforation der Folie mittels einer rotierenden Walze mit aufgebrachten Nadeln.

Danach wird das Profilelement einer Perforationseinheit zum Perforieren des Verbindungselements des Profilelements zugeführt. Die Perforierung des Verbindungselements verläuft vorzugsweise in der Mitte des Verbindungselements, d.h. in Längsrichtung des Profilelementes. Diese Perforierung ermöglich ein leichtes Trennen (Auseinanderreißen) oder alternativ ein Auseinanderziehen der beiden Profilelementhälften.

Um verschiedene Profildimensionen, insbesondere verschiedene Breiten des Auflagebereiches des Profilelements zu erhalten, kann das Verbindungselement des erfindungsgemäßen Profilelements mit einem Verbreiterungselement in Form einer Folienschlaufe versehen werden. Diese wird über eine zweite Zuführungsvorrichtung zugeführt, über eine Formschulter zur Formgebung der Folie geleitet und durch eine zweite thermische Schweißanlage mit der oberen oder unteren Außenseite der ersten Folie verbunden. Befestigung kann alternativ auch durch Aufnähen oder Aufkleben oder erfolgen. Die Dimension der Schlaufe ist so bemessen, dass nach dem Auseinanderziehen der beiden Profilelementhälften mittels Durchtrennen der Perforierung des Verbindungselements die gewünschte Breite für ein alternatives Profil entsteht. So kann durch einen Trennungsschritt eine zweite Profildimension erhalten werden, d.h. das Profilelement ist beispielsweise gleichzeitig für eine 3-5/8 Inch- (92 mm) bzw. 6 Inch- (152 mm) Schiene einsetzbar.

Ferner kann das erfindungsgemäße Profilelement ein oder mehrere zusätzliche Verbreiterungselemente in Form von Schlaufen aufweisen. Diese zusätzlichen Verbreiterungselemente können dadurch erhalten werden, dass die Schlaufe des zumindest einen Verbreiterungselements noch ein oder mehrere Male mit einer Schweißnaht unterteilt werden, so dass mit einem Produkt durch entsprechendes Auseinandertrennen der Naht oder Nähte mehrere Profilbreiten abgedeckt werden können. Insbesondere, können durch das eine oder durch die mehreren Verbreiterungselemente die gängigen U-Profile mit Profilbreiten von 2-1/2 Inch (64 mm), 3-5/8 Inch (92 mm), 4 Inch (102 mm), 6 Inch (152 mm), 8 Inch (203 mm) und 10 Inch (254 mm) abgedeckt werden. Hierdurch werden die Installation und insbesondere die Positionierung des Profilelements auf dem Steg des U-Profils erleichtert. Zur Erleichterung der Auswahl der gewünschten Breite des Profilelements für ein bestimmtes Profil, können die Verbreiterungselemente mit Markierungen für die bestimmten Profilgrößen versehen werden. Durch die Flexibilität des Verbreiterungselements ist es jedoch möglich, auch andere Profilbreiten von U-Profilen eines Trockenständerbauwerkes mit dem erfindungsgemäß hergestellten Profilelement abzudecken und die Fuge abzudichten.

Weiter kann das Verfahren noch einen Schritt des Aufbringens von Klebebändern oder selbstklebenden Vorrichtungen auf das Profilelement umfassen, falls gewünscht.

Zum Schluss wird das fertige Profilelement gegebenenfalls zu einer Schneideeinheit geführt, wo das Zuschneiden der gewünschten Länge des Profilelements erfolgt, falls keine kontinuierliche Herstellung gewünscht ist.

Das erfindungsgemäße Verfahren ermöglicht so eine kostengünstige, ökonomische, kontinuierliche und endlose Herstellung von universellen Profilelementen. Das erfindungsgemäße Verfahren wird vorzugweise mittels einer Vorrichtung zur Herstellung derartiger Profilelemente durchgeführt.

Eine solche Vorrichtung zur Herstellung derartiger Profilelemente weist eine Gießanlage zum Mischen und Aufbringen eines fließfähigen Reaktionsgemisches auf und umfasst
a) eine erste Zuführungsvorrichtung zur Zuführung einer ersten Folie,
b) eine Walze zur Perforation der Folie,
c) mindestens ein Fördermittel zur flachen Auflage und Beförderung der Folie,
d) eine Formschulter zur Formgebung der ersten Folie,
e) eine Dosieranlage zur Aufbringung eines fließfähigen Reaktionsgemisches,
f) eine erste thermische Schweißanlage zum Verbinden eines ersten Seitenkantenbereichs der ersten Folie mit einem zweiten Seitenkantenbereich der ersten Folie,
g) eine Reaktionsstrecke zum Aufschäumen des fließfähigen Reaktionsgemisches,
h) Fördertechnik zum exakten Führen der Folie,
i) mindestens ein Förderband oder Profil zur Formgebung der gewünschten Profilgeometrie,
j) eine Perforationseinheit zum Entlüften des Profilelements,
k) eine Perforationseinheit zum Perforieren des Verbindungselements, und
l) eine Schneideeinheit zum Zuschneiden der gewünschten Länge des Profilelements.

Vorzugsweise umfasst die Zuführungsvorrichtung zur Zuführung der Folie mindestens eine Rolle. Weiter bevorzugt umfasst die Fördertechnik zum exakten Führen der Folie ein Förderband oder Laufband mit Führungselementen, z. B. Noppen oder Vertiefungen. Vorzugsweise kann dem Förderband oder Profil zur Formgebung der gewünschten Profilgeometrie jede gewünschte Form gegeben bzw. jede gewünschte Form durch das Förderband oder Profil erzeugt werden und somit die Profilgeometrie des Profilelements vorbestimmt werden.

Ferner umfasst die Vorrichtung eine zweite Zuführungsvorrichtung zur Zuführung einer zweiten Folie, eine Formschulter zur Formgebung der zweiten Folie, und eine zweite thermische Schweißanlage zum Verbinden der zweiten Folie mit der oberen oder unteren Außenseite der ersten Folie. Die ermöglicht die Ausstattung des Profilelements mit einem Verbreiterungselement.

Ferner kann die Vorrichtung eine Abrollvorrichtung zur Aufbringung von Klebebändern auf das Profilelement umfassen. Durch Auseinanderreißen, ohne Einsatz von Werkzeug, lassen sich dann einfach zwei getrennte Profilelementhälften herstellen, die jeweils ein Dichtbereich besitzen, und die unter Zuhilfenahme der Klebebänder entweder für eine einseitige Abdichtung oder für breitere U-Profile, insbesondere U-Profile mit Profilbreiten von mehr als 10 Inch (254 mm), genutzt werden können.

Von besonderer praktischer Bedeutung ist eine besondere Ausgestaltung des erfindungsgemäß hergestellten Profilelements zur Abdichtung einer Fuge zwischen einem ersten Bauteil und einem zweiten Bauteil, wobei das Profilelement ein langgestrecktes Verbindungselement und mindestens zwei Dichtbereiche umfasst, die beabstandet nebeneinander in Verbindungselementlängsrichtung verlaufend an dem Verbindungselement am äußeren Rand positioniert sind. Vorzugsweise wird das erfindungsgemäß hergestellte Profilelement für die akustische, rauchsichere und/oder brandsichere Abdichtung von Anschlussfugen bei Trockenbauwänden verwendet. Dabei ist besonders bevorzugt, dass das Profilelement im oberen Bereich der Anschlussfuge positioniert und dazu konfiguriert ist, die Fuge von außen abzudichten.

Ein solches Profilelement ist in PCT/EP2016/053013 im Detail beschrieben.

Bevorzugte Querschnittsformen der Dichtbereiche des erfindungsgemäß hergestellten Profilelements sind Rundprofil und Mehreckprofil, insbesondere Rechteckprofil, Quadratprofil, Ovalprofil, Parallelogrammprofil, Dreieckprofil und Rechteckprofil mit abgerundeten Ecken. Besonders bevorzugt ist ein Rechteckprofil mit abgerundeten Ecken. Es sind jedoch auch andere oder gemischte Profilgeometrien denkbar und möglich, solange die Dichtbereiche nach der Installation des Profilelements an die beiden Bauteile angrenzen und die zwischen den Bauteilen bestehende Fuge verschließen können.

Die Dimension und Profilgeometrie sowie die Materialien des erfindungsgemäß hergestellten Profilelements werden entsprechend der geplanten Verwendung des Profilelements gewählt und leicht durch das erfindungsgemäße Verfahren realisiert werden.

Im Allgemeinen wird die Dimension des erfindungsgemäß hergestellten Profilelements in Abhängigkeit der verwendeten Profile und des verwendeten Materials gewählt. Die Dimension muss so gewählt werden, dass das Profilelement den Spalt zwischen der Gipskartonplatte und der Decke ausfüllt und abdichtend sowohl an der Decke als auch auf der Gipskartonplatte anliegt. Soll eine vertikale Bewegung der Gipskartonplatten zugelassen werden, muss das Profilelement, insbesondere die Dichtbereiche der Bewegung der Gipskartonplatte folgen, damit der Kontakt mit der Gipskartonplatte nicht abreißt und keine Lücke zwischen Dichtbereich und Gipskartonplatte entstehen kann. Hierzu besteht das erfindungsgemäß hergestellte Profilelement aus rückstellfähigem und komprimierbarem Material, wie Polyurethanschaum, und wird bei der Montage der Gipskartonplatten entsprechend vorkomprimiert, damit einer Abwärtsbewegung der Gipskartonplatte, wodurch der Spalt zwischen dieser und der Decke vergrößert wird, gefolgt werden kann. Die voreingestellte Bewegungsfreiheit der Gipskartonplatte bestimmt somit die Dimension des Profilelements.

Der Bereich des Verbindungselements, der zwischen den beiden Dichtbereichen, genauer zwischen den beiden Angriffspunkten des Verbindungselements an dem Dichtbereich liegt, definiert einen Auflagebereich, der nur aus dem Verbindungselement besteht. Der Auflagebereich wird dabei so dimensioniert, dass dieser etwa der Breite des Steges des U-Profils entspricht. Hierdurch werden die Installation und insbesondere die Positionierung des Profilelements auf dem Steg des U-Profils erleichtert. Bevorzugt ist, dass der Auflagebereich des erfindungsgemäßen Profilelements eine Breite im Bereich von etwa 30 mm bis etwa 300 mm hat, vorzugsweise im Bereich von etwa 50 bis 250 mm, und bevorzugter im Bereich von etwa 90 bis 155 mm. Besonders bevorzugt ist, dass der Auflagebereich des erfindungsgemäß hergestellten Profilelements eine Breite von 67 mm für eine 2-1/2 Inch- (64 mm) Schiene, von 95 mm für eine 3-5/8 Inch- (92 mm) Schiene, von 105 mm für eine 4 Inch- (102 mm) Schiene, von 155 mm für eine 6 Inch- (152 mm) Schiene, von 206 mm für eine 8 Inch- (203 mm) Schiene bzw. von 257 mm für eine 10 Inch-(254 mm) Schiene hat. Am meisten bevorzugt ist, dass der Auflagebereich des erfindungsgemäß hergestellten Profilelements eine Breite von 95 mm für eine 3-5/8 Inch- (92 mm) Schiene bzw. von 155 mm für eine 6 Inch- (152 mm) Schiene hat.

Die Positionierung des erfindungsgemäß hergestellten Profilelements an einem Bauteil kann in einem Schritt erfolgen. Es ist auch möglich, dass das Profilelement seinerseits Mittel zur Befestigung an einem Bauteil, wie einem Trockenbauprofil, aufweist, beispielsweise in Form einer Selbstklebeschicht, in Form von form- oder kraftschlüssig wirkenden Mitteln, wie geeignete Profilierungen, oder dergleichen. Das erfindungsgemäß hergestellte Profilelement wird vorzugsweise in einem Schritt an ein Bauteil positioniert.

Die Verwendung eines erfindungsgemäß hergestellten Profilelements umfasst die Positionierung vor der Anbringung eines ersten Bauteils auf dem ersten Bauteil, und dann gemeinsames Befestigen mit diesem an einem zweiten Bauteil in üblicher Weise, z.B. durch Schrauben oder Nageln. Vorzugsweise ist das erste Bauteil ein Rahmenprofil eines Trockenbauständerwerks, etwa ein U-Profil, und das zweite Bauteil eine Wand, eine Decke oder ein Boden eines Bauwerks. Besonders bevorzugt ist das erste Bauteil ein U-Profil, und das zweite Bauteil eine Decke. Mit dieser Anordnung ist das Profilelement im äußeren Bereich der Fuge, insbesondere der Anschlussfuge positioniert und dazu konfiguriert, die Fuge von außen abzudichten.

Bei der Verwendung des erfindungsgemäß hergestellten Profilelements auf dem U-Profil und auf Stoß mit der Decke können Unebenheiten in beiden Bauteilen ausgeglichen werden und eine einfache Positionierung ohne Verklebung ist möglich. Ferner kann durch die anschließende Positionierung der Gipskartonplatte sowie durch die Auswahl des Dichtmaterials und/oder Geometriegestaltung des Profilelements der Fugenabstand kontrolliert werden.

Das erfindungsgemäß hergestellte Profilelement lässt sich auf alle Arten von Anschlussfugen anwenden, bei denen ein Bauteil auf ein anderes Bauteil trifft. Dementsprechend lässt sich das Profilelement auf alle Profile, auch geschlossene Profile oder Holzbalken, anwenden, die zu einer Anschlussfläche abgedichtet werden müssen.

Eine besonders bevorzugte Verwendung des erfindungsgemäß hergestellten Profilelements betrifft somit die Abdichtung der Profile im Trockenbau, wobei das erste Bauteil ein Decken-, Boden- oder Wandprofil oder ein Metall- oder Holzständerwerk eines Trockenbauelements ist und das zweite Bauteil ein Boden, eine Decke oder eine Wand eines Bauelements, beispielsweise ein Mauerwerk oder Betonbauelement, ist. Bei dem Profil kann es sich um irgendeines der üblicherweise verwendeten Profile für den Trockenbau handeln, unabhängig davon, ob es einen geschlitzten oder ungeschlitzten Steg bzw. geschlitzte oder ungeschlitzte Flansche aufweist. Die weiteren Bauteile sind Gipskartonplatten, die eng an die Profile anliegen und am Ständerwerk befestigt werden. Um eine vertikale Bewegung der Gipskartonplatten, etwa im Falle eines Erdbebens, zuzulassen, werden die Gipskartonplatten auf Abstand zu einer Wand, einem Boden oder einer Decke, vertikal beweglich montiert. Dadurch entsteht eine Lücke (hierin auch Fuge genannt) zwischen der Gipskartonplatte und der Wand, dem Boden oder der Decke. Diese Fuge wird durch das Profilelement ausgefüllt, so dass das Profilelement die Fuge gegen Schall und/oder Rauch und je nach Material gegebenenfalls auch gegen Feuer abdichtet.

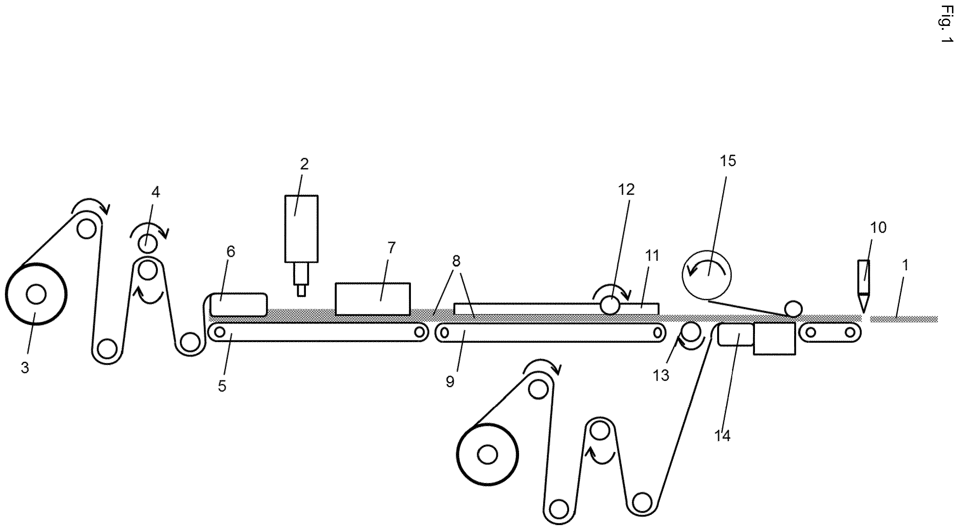

Ohne den Schutzumfang der Erfindung einzuschränken, wird die Erfindung anhand der Herstellung eines erfindungsmäßen Profilelements mittels einer Vorrichtung, die in Figur 1 schematisch dargestellt ist, näher beschrieben.

Bei der in Figur 1 dargestellten Vorrichtung zur Herstellung eines Profilelements 1 wird eine Polyethylenfolie, von einem Folienvorrat 3 mittels einer Zuführungsvorrichtung über mindestens eine Walze 4 geführt, wo gegebenenfalls die Perforation erfolgt. Die Perforation wird durch eine rotierende Walze 4 mit aufgebrachten Nadeln durchgeführt. Die Folie wird dann flach auf ein Fördermittel 5 aufgelegt und über eine Formschulter 6 geleitet, wo die Seitenkantenbereiche der Folie aufgestellt werden (Formgebung der ersten Folie), um ein fließfähiges intumeszierendes Polyurethan-Material aufzubringen. Das fließfähige Polyurethan-Material wird mittels einer Gießanlage 2 gemischt und auf die Folie durch gleichmäßiges orthogonales Dosieren zu der Oberseite der Folie aufgebracht. Die Folie wird anschließend mittels Fördermittel 5 zu einer thermischen Schweißanlage 7 geführt, wo ein erster Seitenbereich der Folie mit einem zweiten Seitenkantenbereich der Folie durch thermisches Schweißen unter Ausbildung einer Fischflossenschweißnaht verbunden wird. Fördermittel 5 kann auch in die thermische Schweißanlange 7 integriert sein. Dieses so entstandene schlauchartige Profilelement 1 wird im folgendem mittels Fördertechnik 9 über eine Reaktionsstrecke 8 geführt, in der das Aufschäumen des Polyurethan-Materials erfolgt. Durch mindestens ein Förderband oder Profil 11 wird die gewünschte Profilgeometrie geformt. Anschließend findet eine Entlüftung des Profilelements 1 mittels einer Perforationseinheit 12 statt, beispielsweise eine Nadelwalze, wenn der Schaum die Form ausgefüllt hat. Danach wird das Profilelement 1 einer Perforationseinheit 13 zum Perforieren des Verbindungselements des Profilelements zugeführt. Gegebenenfalls wird dann das Profilelement 1 mit einem Verbreiterungselement in Form einer Folienschlaufe versehen, das über eine zweite Zuführungsvorrichtung zugeführt wird, über eine Formschulter zur Formgebung der Folie geleitet wird und durch eine zweite thermische Schweißanlage 14 mit der oberen oder unteren Außenseite der ersten Folie verbunden wird. Mit Abrollvorrichtung 15 können gegebenenfalls Klebebänder auf das Profilelement aufgebracht werden. Anschließend wird das fertige Profilelement 1 zu einer Schneideeinheit 10 geführt, wo das gegebenenfalls das Zuschneiden der gewünschten Länge des Profilelements 1 erfolgt.

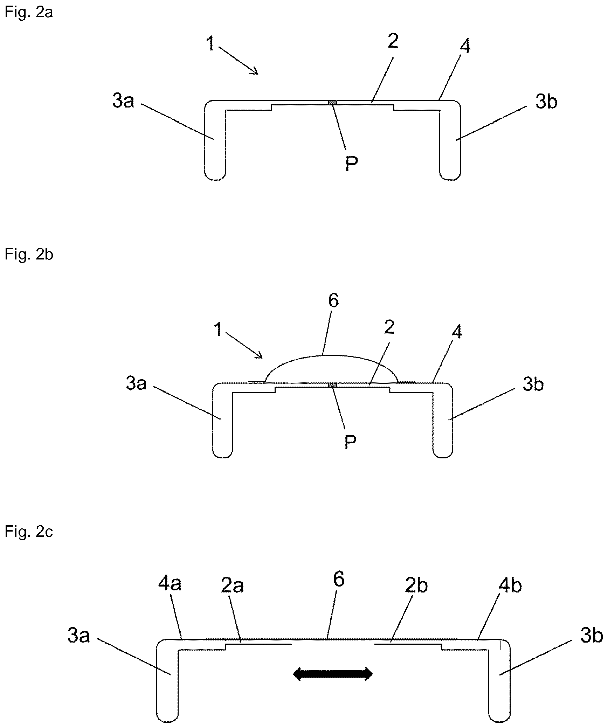

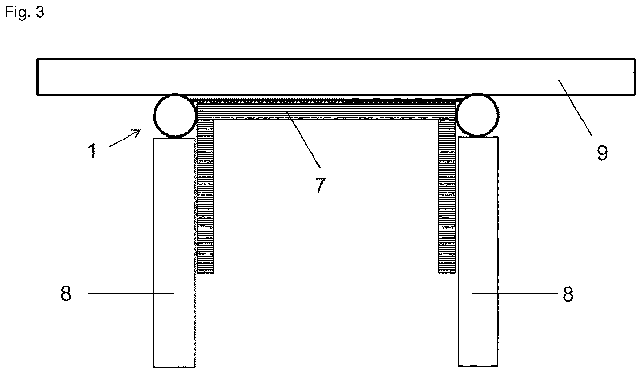

In Figuren **2a** bis **2c** ist eine bevorzugte Ausführungsform eines erfindungsgemäß hergestellten Profilelements 1 gezeigt. Das Profilelement 1 weist zwei Dichtbereiche 3a und 3b auf, die an den äußeren Rändern des Verbindungselements 2 positioniert sind. Die Dichtbereiche 3a und 3b weisen ein Rechteckprofil mit abgerundeten Ecken und ein Vollprofil auf. Die Dichtbereiche 3a und 3b und das Verbindungselement 2 bestehen aus einem komprimierbaren Polyurethan-Schaumstoff, der gegebenenfalls Brandschutzadditive enthält. Die Polyethylenfolie 4 umschließt den Polyurethan-Schaumstoff vollständig. Das Verbindungselement 2 weist eine Perforierung (P) in Längsrichtung des Profilelements 1 auf und gegebenenfalls ein Verbreiterungselement 6 aus einer Kunststofffolie (Fig. 2b), das an der Oberseite des Verbindungselements 2 befestigt ist. Figur 2c zeigt das an der Perforierung getrennte Profilelement 1 aus Figur 3a, wobei die zwei Profilelementhälften jeweils ein Dichtbereich 3a, 3b aufweisen, jeweils einen Teil 2a, 2b des Verbindungselements 2 aufweisen und jeweils teilweise mit Kunststofffolie 4a, 4b umhüllt sind und wobei das Verbreiterungselement 6 die beiden auseinandergetrennten Profilelementbandhälften verbindet.

In Figur **3** skizziert die Anwendung einer Ausführungsform eines erfindungsgemäß hergestellten Profilelements 1, für die akustische, rauchsichere und/oder brandsichere Abdichtung von Anschlussfugen bei Trockenbauwänden, wobei die Dichtbereiche ein Rund- und Vollprofil aufweisen. Zur Abdichtung des Spalts zwischen einer Decke 9, dem U-Profil 7 eines Trockenbauständerwerks und den Gipskartonplatten 8 wird in dem ersten Schritt das Profilelement 1 auf den Steg des U-Profils 7 gelegt und zusammen mit diesem in dem zweiten Schritt an der Decke 9 in üblicher Weise, z.B. durch Schrauben oder Nageln, befestigt. Dann werden in einem letzten Schritt die Gipskartonplatten 8 an die Flansche des U-Profils 7 angelegt, nach oben Richtung Decke 9 geschoben, wobei ein Spalt zwischen der Oberkante der Gipskartonplatte 8 und der Decke 9 verbleibt, der mit den Dichtbereichen 3a und 3b des Profilelements 1 ausgefüllt ist, um etwa eine vertikale Bewegung der Gipskartonplatte 8 zuzulassen. Dadurch werden die Dichtbereiche 3a und 3b zusammengedrückt und dichten so den Spalt zwischen der Decke 9 und dem U-Profil 7 und den Spalt zwischen der Decke 9 und der Gipskartonplatte 8 ab. Positionierung der Gipskartonplatte ist auch auf dem Dichtbereich des Profilelements möglich. Das Profilelement 1 ist daher im oberen Bereich der Anschlussfuge positioniert und dazu konfiguriert, die Fuge von außen abzudichten.

Wie aus dem oben Ausgeführten ersichtlich wird, eignet sich das erfindungsgemäße Verfahren besonders dazu, in kostengünstiger, ökonomischer, kontinuierlicher und endloser Weise ein Profilelement für die akustische, rauchsichere und/oder brandsichere Abdichtung von Anschlussfugen bei Trockenbauwänden vor allem von Bewegungsfugen, herzustellen.

Das erfindungsgemäße Verfahren und die erfindungsgemäße Vorrichtung zeichnen sich besonders durch folgende Vorteile gegenüber Systemen des Standes der Technik aus:
Durch das gleichmäßige orthogonale Dosieren zu der Oberfläche der Folie, tritt kein Verschmutzen von möglichen Prozesszuleitungen auf, da der Schaum nur mit der Folie in Berührung kommt und nicht mit weiteren Vorrichtungsbestandteilen. Weiterhin ermöglicht die Vorrichtung ein schnelles Rüsten auf andere Dimensionen und Durchmesser des gewünschten Profilelements, z. B. durch Wechseln der Formschulter und Einstellen der Folienbreite sowie der gewünschte Länge des Profilelements, ohne aufwendiges Rüsten. Das erfindungsgemäße Verfahren und die Vorrichtung ermöglicht die Herstellung von Profilelementen für unterschiedliche Profilbreiten eines U-Profils eines Trockenbauständerwerks, insbesondere für die gewöhnlichen Profilbreiten von 2-1/2 Inch (64 mm), 3-5/8 Inch (92 mm), 4 Inch (102 mm), 6 Inch (152 mm), 8 Inch (203 mm) und 10 Inch (254 mm). Durch das erfindungsgemäß hergestellte Profilelement wird ein universelles Produkt für verschiedene Profilgrößen und Anwendungen bereitgestellt, das sich darüber hinaus in einer Fertigungslinie kostengünstig herstellen lässt.

Durch den flexiblen Einsatz mehrere Förderbänder oder Profile, kann eine freie Profilgeometriegestaltung, je nach gewünschtem Einsatzgebiet, erfolgen. Die Folie des erfindungsgemäß hergestellten Profilelements dient gleichzeitig als Montagehilfe, d .h. weitere Montagehilfsmittel sind nicht notwendig, und wird vor Verwendung nicht entfernt. Dies hat weiterhin den Vorteil, dass das Profilelement schnell montiert werden kann, dass der Schaum vor Spritzwasser und beim Einbringen geschützt wird.

Darüber hinaus verhindert das erfindungsgemäße Verfahren und die Vorrichtung einen auftretender Rückstau der Materialmasse in einem schon vorgefertigten Schlauch während des Herstellungsverfahrens oder ungenügend Materialmasse in der hergestellten Fugenschnur. Weiter wird auch die Durchmischungsqualität/Homogenität des Schaums durch die Formgebung nicht beeinflusst.

Wie aus dem oben Ausgeführten auch ersichtlich wird, eignet sich das erfindungsgemäß hergestellte Profilelement besonders dazu, in einfacher Weise eine Bauwerksfuge zwischen zwei aneinandergrenzenden Bauteilen sicher abzudichten, insbesondere gegen Schall und/oder Rauch und gegebenenfalls auch gegen Feuer.

Ferner ist die Anwendung sehr montagefreundlich, da keine zusätzliche Befestigung des Profilelements etwa an dem Profil oder an der Decke notwendig ist. Ein passgenaues Anlegen des Profilelements etwa an ein Profil ist aufgrund der Selbstzentrierung des Profilelements bei der Montage des Profils an einem Bauteil ebenfalls nicht notwendig. Die Montage ist daher denkbar einfach und der Arbeitsaufwand zur Montage des Profilelements ist deutlich reduziert. Mit dem erfindungsgemäß hergestellten Profilelement wird daher eine sichere und zuverlässige Abdichtung von Fugen zwischen zwei Bauteilen, insbesondere zwischen einem Profil eines Trockenbauständerwerks und einem daran angrenzenden Bauteil, wie etwa eine Decke, Wand oder ein Boden, erreicht. Dabei kann eine beidseitige Abdichtung in nur einem Arbeitsgang erreicht werden, indem ein vorgefertigtes Profilelement bereitgestellt wird.

Weiterhin hat sich gezeigt, dass mit dem erfindungsgemäß hergestellten Profilelement hervorragende Dichtigkeiten erzielt werden können, da eine gute Komprimierbarkeit der Dichtbereiche durch Auswahl der Dichtmaterialien und/oder Geometriegestaltung ohne zusätzliche Hilfsmittel gewährleistet ist. Die erfindungsgemäß hergestellten Profilelemente ermöglichen es auch, den richtigen Abstand von Gipskartonplatte zu dem Anschlussbauteil ohne zusätzliche Hilfsmittel einzustellen, um besagte Vorkomprimierung zu erreichen.

Mit dem erfindungsgemäß hergestellten Profilelement kann auch sichergestellt werden, dass bereits durch die Auswahl der Dichtmaterialien und/oder Geometriegestaltung genügend Material installiert wird, um eine hervorragende Dichtigkeit bei maximaler Bewegungsaufnahme zu gewährleisten.

Mit dem erfindungsgemäß hergestellten Profilelement können ferner Unebenheiten einer Bauteiloberfläche bereits beim Anordnen eines Bauteils an ein anderes Bauteil sicher abgedichtet werden, da die Dichtbereiche des Profilelements ausreichend fest an die Oberfläche des einen Bauteils und gleichzeitig an die Seitenflächen des anderen Bauteils angepresst werden.

In Anbetracht des Vorstehenden ist ersichtlich, dass die Aufgaben der Erfindung gelöst werden. Da verschiedene Änderungen an dem oben beschriebenen Verfahren, der Vorrichtung, erfindungsgemäß hergestelltem Profilelement und dessen Verwendung gemacht werden können, ohne vom Umfang der Erfindung abzuweichen, ist es beabsichtigt, dass alle in der obigen Beschreibung enthaltenen Gegenstände als illustrativ und nicht in einem einschränkenden Sinne interpretiert werden.

## Patentansprüche

1. Verfahren zur Herstellung eines Profilelements (1) zum Abdichten einer Bauwerksfuge, umfassend die folgenden Schritte:
a) Bereitstellen einer ersten Folie (4) auf einem Förderband,
b) Aufbringen eines fließfähigen Reaktionsgemisches auf einer Oberseite der ersten Folie,
c) Verbinden eines ersten Seitenkantenbereichs der ersten Folie mit einem zweiten Seitenkantenbereich der ersten Folie zum Erzeugen eines zylindrischen Profilelements, wobei das Volumen des aufzubringenden fließfähigen Reaktionsgemisches so dosiert wird, dass es im ausreagierten Zustand dem Innenvolumen des hergestellten Profilelements entspricht und wobei die Folie das Reaktionsgemisch vollständig umschließt,
d) Perforierung des Profilelements,
e) Aufschäumen des fließfähigen Reaktionsgemisches,
f) Formgebung der gewünschten Profilgeometrie,
g) Entlüftung des Profilelements,
h) Zuschneiden der gewünschten Länge des Profilelements,
i) Bereitstellen einer zweiten Folie, und
j) Verbinden der zweiten Folie in Form einer Schlaufe mit der oberen oder unteren Außenseite der ersten Folie, und
wobei die Schritte c) und j) das Verbinden mittels thermischen Schweißens umfasst.

2. Verfahren nach Anspruch 1, wobei die erste Folie und/oder die zweite Folie aus Kunststoff ist.

3. Verfahren nach Anspruch 1 oder 2, wobei die erste Folie aus Polyethylen besteht und perforiert ist.

4. Verfahren nach einem der vorhergehenden Ansprüche, wobei das fließfähige Reaktionsgemisch ein Polyurethangemisch ist.

5. Verfahren nach Anspruch 4, wobei das Polyurethangemisch ein intumeszierendes Polyurethangemisch ist.

6. Verfahren nach einem der vorhergehenden Ansprüche, wobei das Profilelement ein langgestrecktes Verbindungselement und mindestens zwei Dichtbereiche (3a, 3b) umfasst, die beabstandet nebeneinander in Verbindungselementlängsrichtung verlaufend an dem Verbindungselement am äußeren Rand positioniert sind.

7. Verfahren nach einem der vorhergehenden Ansprüche, wobei das Verfahren ein kontinuierliches und endloses Verfahren ist.

8. Vorrichtung zur Herstellung eines Profilelements (1), zum Abdichten einer Bauwerksfuge, mit einer Gießanlage (2) zum Mischen und Aufbringen eines fließfähigen Reaktionsgemisches, umfassend
a) eine erste Zuführungsvorrichtung zur Zuführung einer ersten Folie,
b) eine Walze zur Perforation der Folie,
c) mindestens ein Fördermittel (5) zur flachen Auflage und Beförderung der Folie,
d) eine Formschulter (6) zur Formgebung der ersten Folie,
e) eine Dosieranlage zur Aufbringung eines fließfähigen Reaktionsgemisches,
f) eine erste thermische Schweißanlage (7) zum Verbinden eines ersten Seitenkantenbereichs der ersten Folie mit einem zweiten Seitenkantenbereich der ersten Folie,
g) eine Reaktionsstrecke (8) zum Aufschäumen des fließfähigen Reaktionsgemisches,
h) Fördertechnik (9) zum exakten Führen der Folie,
i) mindestens ein Förderband oder Profil (11) zur Formgebung der gewünschten Profilgeometrie,
j) eine Perforationseinheit (12) zum Entlüften des Profilelements;
k) eine weitere Perforationseinheit (13) zum Perforieren des Verbindungselements, und
l) eine Schneideeinheit (10) zum Zuschneiden der gewünschten Länge des Profilelements,
m) eine zweite Zuführungsvorrichtung zur Zuführung einer zweiten Folie,
n) eine Formschulter zur Formgebung der zweiten Folie, und
o) eine zweite thermische Schweißanlage (14) zum Verbinden der zweiten Folie mit der oberen oder unteren Außenseite der ersten Folie.

9. Vorrichtung nach Anspruch 8, ferner umfassend p) eine Abrollvorrichtung (15) zur Aufbringung von Klebebändern auf das Profilelement.

10. Vorrichtung nach Anspruch 8 oder 9, wobei die Zuführungsvorrichtung zur Zuführung der ersten und/oder der zweiten Folie mindestens eine Rolle umfasst.

11. Vorrichtung nach einem der Ansprüche 8 bis 10, wobei die Fördertechnik zum exakten Führen der Folie ein Förderband mit Führungselementen umfasst.

12. Verwendung des Verfahrens gemäß einem der Ansprüche 1 bis 7 und/oder der Vorrichtung gemäß einem der Ansprüche 8 bis 11 zur Herstellung eines Profilelements.

13. Verwendung nach Anspruch 12, wobei das Profilelement für die akustische, rauchsichere und/oder brandsichere Abdichtung von Anschlussfugen bei Trockenbauwänden vorgesehen ist.

## Claims

1. Method for producing a profiled element (1) for sealing a structural joint, comprising the following steps:
a) providing a first film (4) on a conveyor belt,
b) applying a flowable reaction mixture to an upper face of the first film;
c) connecting a first side edge region of the first film to a second side edge region of the first film to create a cylindrical profiled element, wherein the volume of the flowable reaction mixture to be applied is metered such that, in the fully reacted state, said volume corresponds to the inner volume of the profiled element produced, and wherein the film completely encloses the reaction mixture,
d) perforating the profiled element,
e) foaming the flowable reaction mixture,
f) shaping the desired profile geometry,
g) venting the profiled element,
h) cutting the profiled element to the desired length,
i) providing a second film, and
j) connecting the second film to the upper or lower outer face of the first film in the form of a loop, and wherein steps c) and j) comprise connection by means of thermal welding.

2. Method according to claim 1, wherein the first film and/or the second film is made of plastics material.

3. Method according to either claim 1 or claim 2, wherein the first film consists of polyethylene and is perforated.

4. Method according to any of the preceding claims, wherein the flowable reaction mixture is a polyurethane mixture.

5. Method according to claim 4, wherein the polyurethane mixture is an intumescent polyurethane mixture.

6. Method according to any of the preceding claims, wherein the profiled element comprises an elongate connection element and at least two sealing regions (3a, 3b) which are positioned on the outer edge of the connection element so as to be spaced apart next to one another and so as to extend in the longitudinal direction of the connection element.

7. Method according to any of the preceding claims, wherein the method is a continuous and endless method.

8. Device for producing a profiled element (1) for sealing a structural joint, having a pouring system (2) for mixing and applying a flowable reaction mixture, the device comprising
a) a first feed device for feeding a first film,
b) a roller for perforating the film,
c) at least one conveying means (5) for supporting the film in a planar manner and conveying the film,
d) a shaping shoulder (6) for shaping the first film,
e) a metering system for applying a flowable reaction mixture,
f) a first thermal welding system (7) for connecting a first side edge region of the first film to a second side edge region of the first film,
g) a reaction path (8) for foaming the flowable reaction mixture,
h) conveyor equipment (9) for accurately guiding the film,
i) at least one conveyor belt or profile (11) for shaping the desired profile geometry,
j) a perforation unit (12) for venting the profiled element,
k) a further perforation unit (13) for perforating the connection element, and
l) a cutting unit (10) for cutting the profiled element to the desired length,
m) a second feed device for feeding a second film,
n) a shaping shoulder for shaping the second film, and
o) a second thermal welding system (14) for connecting the second film to the upper or lower outer face of the first film.

9. Device according to claim 8, further comprising
p) an unwinding device (15) for applying adhesive tapes to the profiled element.

10. Device according to either claim 8 or claim 9, wherein the feed device comprises at least one roll for feeding the first and/or the second film.

11. Device according to any of claims 8 to 10, wherein the conveyor equipment comprises a conveyor belt having guide elements for accurately guiding the film.

12. Use of the method according to any of claims 1 to 7 and/or the device according to any of claims 8 to 11 for producing a profiled element.

13. Use according to claim 12, wherein the profiled element is provided for sealing connection joints in drywalls in an acoustic, smoke-proof and/or fire-proof manner.

## Revendications

1. Procédé de fabrication d'un élément profilé (1) permettant d'assurer l'étanchéité d'un joint de construction,
comprenant les étapes suivantes :
a) fourniture d'un premier film (4) sur une bande transporteuse,
b) application d'un mélange réactionnel coulant sur une face supérieure du premier film,
c) liaison d'une première zone de bord latéral du premier film à une seconde zone de bord latéral du premier film afin de créer un élément profilé cylindrique, le volume du mélange réactionnel coulant à appliquer étant dosé de telle manière que, au terme de sa réaction, il correspond au volume intérieur de l'élément profilé fabriqué et le film renfermant complètement le mélange réactionnel,
d) perforation de l'élément profilé,
e) moussage du mélange réactionnel coulant,
f) moulage de la géométrie de profilé souhaitée,
g) ventilation de l'élément profilé,
h) découpe de la longueur souhaitée de l'élément profilé,
i) fourniture d'un second film, et
j) liaison du second film sous la forme d'une boucle avec le côté extérieur supérieur ou inférieur du premier film, et
les étapes c) et j) comprenant la liaison au moyen d'un soudage thermique.

2. Procédé selon la revendication 1, dans lequel le premier film et/ou le second film est en plastique.

3. Procédé selon la revendication 1 ou 2, dans lequel le premier film est constitué de polyéthylène et est perforé.

4. Procédé selon l'une des revendications précédentes, dans lequel le mélange réactionnel coulant est un mélange de polyuréthane.

5. Procédé selon la revendication 4, dans lequel le mélange de polyuréthane est un mélange de polyuréthane intumescent.

6. Procédé selon l'une des revendications précédentes, dans lequel l'élément profilé comprend un élément de liaison allongé et au moins deux zones d'étanchéité (3a, 3b), lesquelles sont positionnées de façon espacée et adjacente sur l'élément de liaison au niveau du bord extérieur, en s'étendant dans la direction longitudinale de l'élément de liaison.

7. Procédé selon l'une des revendications précédentes, dans lequel le procédé est un procédé continu et sans fin.

8. Dispositif de fabrication d'un élément profilé (1) permettant d'assurer l'étanchéité d'un joint de construction, comportant un système de coulée (2) permettant de mélanger et d'appliquer un mélange réactionnel coulant, comprenant
a) un premier dispositif d'alimentation permettant d'alimenter un premier film,
b) un cylindre permettant de perforer le film,
c) au moins un moyen de transport (5) permettant de soutenir et de transporter le film à plat,
d) un épaulement moulé (6) permettant de mouler le premier film,
e) un système de dosage permettant d'appliquer un mélange réactionnel coulant,
f) un premier système de soudage thermique (7) permettant de relier une première zone de bord latéral du premier film à une seconde zone de bord latéral du premier film,
g) une section de réaction (8) permettant de faire mousser le mélange réactionnel coulant,
h) une technique de transport (9) permettant le guidage précis du film,
i) au moins une bande transporteuse ou un profilé (11) permettant de mouler la géométrie de profilé souhaitée,
j) une unité de perforation (12) permettant de ventiler l'élément profilé ;
k) une autre unité de perforation (13) permettant de perforer l'élément de liaison, et
l) une unité de découpe (10) permettant de découper la longueur souhaitée de l'élément profilé,
m) un second dispositif d'alimentation permettant d'alimenter un second film,
n) un épaulement moulé permettant de mouler le second film, et
o) un second système de soudage thermique (14) permettant de relier le second film au côté extérieur supérieur ou inférieur du premier film.

9. Dispositif selon la revendication 8, comprenant en outre
p) un dispositif de déroulement (15) permettant d'appliquer des rubans adhésifs sur l'élément profilé.

10. Dispositif selon la revendication 8 ou 9, dans lequel le dispositif d'alimentation comprend au moins un rouleau permettant l'alimentation du premier et/ou du second film.

11. Dispositif selon l'une des revendications 8 à 10, dans lequel la technique de transport permettant le guidage précis du film comprend une bande transporteuse comportant des éléments de guidage.

12. Utilisation du procédé selon l'une des revendications 1 à 7 et/ou du dispositif selon l'une des revendications 8 à 11 pour la fabrication d'un élément profilé.

13. Utilisation selon la revendication 12, dans laquelle l'élément profilé est prévu pour le scellage acoustique, anti-fumée et/ou ignifuge de joints de construction dans des parois murales sèches.
